# EUROPÄISCHE PATENTSCHRIFT

(11) **EP 3 823 774 B1**
(45) Veröffentlichungstag und Bekanntmachung des Hinweises auf die Patenterteilung: **08.06.2022**
(21) Anmeldenummer: 19756094.9
(22) Anmeldetag: 19.07.2019
(51) Int. Cl.: B22C 3/00

(54) **SCHLICHTEZUSAMMENSETZUNG FÜR GIESSFORMEN FÜR DEN METALLGUSS DEREN VERWENDUNG SOWIE MIT DER SCHLICHTEZUSAMMENSETZUNG VERSEHENE GIESSFORMEN**
SIZING COMPOSITION FOR CASTING MOULDS FOR METAL CASTING, USE THEREOF, AND CASTING MOULDS PROVIDED WITH THE SIZING COMPOSITION
COMPOSITION DE FINITION POUR MOULES DE COULÉE DE MÉTAUX, LEUR UTILISATION ET MOULES DE COULÉE UTILISÉS AVEC LA COMPOSITION DE FINITION

(30) Priorität: 20.07.2018 DE 102018117651
(43) Veröffentlichungstag der Anmeldung: 26.05.2021
(73) Patentinhaber: ASK Chemicals GmbH, 40721 Hilden (DE)
(72) Erfinder: PRIEBE, Christian, 42489 Wülfrath (DE); BUNG, Markus, 45357 Essen (DE); VOSS, Sarah, 41542 Dormagen (DE); KÖRSCHGEN, Jörg, 42799 Leichlingen (DE)
(74) Vertreter: Müller Schupfner & Partner Patent- und Rechtsanwaltspartnerschaft mbB
(86) Internationale Anmeldenummer: PCT/DE2019/100669
(87) Internationale Veröffentlichungsnummer: WO 2020/015791

(56) Entgegenhaltungen:
- CN-A- 105 363 996
- DE-A1-102005 041 863

## Beschreibung

Die Erfindung betrifft eine Schlichtezusammensetzung für Gießformen wie Formen oder Kerne für den Metallguss und mit der Schlichtezusammensetzung versehene Gießformen. Weiterhin betrifft die Erfindung die Verwendung der Schlichtezusammensetzung für Gießformen.

### Hintergrund der Erfindung

Gießformen setzen sich im Wesentlichen aus Formen oder Formen und Kernen zusammen, welche die Negativform des herzustellenden Gussstücks darstellen. Diese Formen und Kerne bestehen dabei in der Regel aus einem feuerfesten Formgrundstoff, beispielsweise Quarzsand, und einem geeigneten Bindemittel, das der Gießform nach der Entnahme aus dem Formwerkzeug eine ausreichende mechanische Festigkeit verleiht. Der feuerfeste Formgrundstoff liegt bevorzugt in rieselfähiger Form vor, so dass er nach dem Mischen mit dem Bindemittel in eine geeignete Hohlform eingefüllt, verdichtet und danach ausgehärtet werden kann.

Formen bilden beim Gießen die äußere Wandung für das Gussstück, Kerne werden zur Ausbildung von Hohlräumen innerhalb des Gussstücks eingesetzt. Dabei ist es nicht zwingend notwendig, dass Formen und Kerne aus demselben Material bestehen. So erfolgt z.B. beim Kokillenguss die äußere Formgebung der Gussstücke mit Hilfe metallischer Dauerformen. Auch ist eine Kombination von Formen und Kernen, die aus unterschiedlich zusammengesetzten Formstoffmischungen und nach unterschiedlichen Verfahren hergestellt wurden, möglich.

Wenn nachstehend vereinfachend nur von Kernen gesprochen wird, gelten die Aussagen in gleichem Maße auch für Formen, die auf einer gleichen Formstoffmischung basieren und nach demselben Verfahren hergestellt wurden.

Die Form(en)- und etwaige Kerne werden zu einem Kempaket zusammengestellt und anschließend mit flüssigem Metall wie Eisen, Stahl, Aluminium, Bronze, andere nicht-Eisen-Metalle abgegossen. Das flüssige Metall füllt dann die Hohlräume und bildet somit das gewünschte Gussstück.

Die hohen Temperaturen des flüssigen Metalls, insbesondere z.B. beim Eisenguss (Gießtemperaturen zwischen ca. 1300°C und 1500°C), oder Stahlguss (Gießtemperaturen zwischen ca. 1500°C bis 1700°C) aber auch beim Leichtmetallguss (Aluminium z.B. 600-700°C) führen zur Zersetzung des organischen Binders und erhitzen den Kern bzw. die Form.

Bei Temperaturerhöhung dehnt sich Quarzsand aufgrund einer Wärmeausdehnung aus, bis bei 573°C eine Modifikationsänderung von alpha- zu beta-Quarz erfolgt, der sogenannte Quarzsprung, der eine sprunghafte Volumenvergrößerung nach sich zieht. Eine weitere Modifikationsänderung des Quarzsandes findet bei 1470°C von beta-Quarz zu (alpha) Cristobalit statt, die ebenfalls mit einer Volumenvergrößerung einhergeht. Diese Modifikationsänderung ist allerdings nicht nur von der Phasenumwandlungstemperatur, sondern auch stark von anderen Parametern, wie z.B. Körnung oder dem Temperatur-Zeit-Gradienten abhängig.

Diese Volumenänderungen werden für mechanische Spannungen im Sandgefüge nahe der Grenzfläche Metallschmelze - Sand verantwortlich gemacht, was zu Rissen in den Formen / Kernen führen kann, die das Eindringen von Metallschmelze in die Formen / Kerne ermöglicht und somit Blattrippen an der Gussoberfläche entstehen.

Andere Sandtypen, sogenannte Sondersande wie z. B. Chromerzsand, Olivine, Schamottesand, Bauxitsand oder auch speziell produzierte Sande, können ebenfalls zur Herstellung von Formen und Kernen verwendet werden. Diese zeigen keine Phasenumwandlung zwischen 20°C und 1700°C, weisen niedrigere Wärmeausdehnungen auf und neigen deutlich weniger zu Blattrippenfehlem. Diese sind jedoch auch deutlich teurer

Das Verfahren zur Herstellung von Gießformen und Kernen umfasst regelmäßig auch das Aufbringen einer Beschichtung, welche auch Schlichte oder Schlichtezusammensetzung genannt wird. Schlichten sind Beschichtungen oder Coatings die als Überzüge auf die Formen oder Kerne aufgebracht werden, insbesondere auf die Flächen, die später mit dem flüssigen Metall in Kontakt kommen.

Mit Einführung der wasserbasierten Schlichten wurde bemerkt, dass die Festigkeiten der mit der wasserbasierten Schlichtezusammensetzung behandelten Kerne deutlich abnehmen. Dieses geht teilweise so weit, dass die Kerne dem metallostatischen Druck nicht mehr standhalten und beim Gießvorgang brechen können. Dieses kann durch einen größer dimensionierten Kern wieder kompensiert werden, was aber die Design- und Konstruktionsfreiheit von Bauteilen limitiert. Daher hat es nicht an Ansätzen gefehlt, die Feuchtebeständigkeit von Kernen über das verwendete Bindemittel zu steuern und zu erhöhen. Beispiele hierzu sind die Verwendung von Silanen oder auch der Zusatz von niedermolekularen Estern oder Anhydriden von Carbonsäuren, wie sie in der AT341125 B beschrieben sind.

Im Bereich der wasserglas-basierten Bindemittel wurden einige Verbesserungen zur Kemstabilität erreicht. Hierzu beschreiben die DE 102011114626 A1 hoch feststoffhaltige Schlichten und die DE 102011115025 A1 schlägt den Zusatz von zweiwertigen Metallsalzen vor, um die Schlichtestabilität der Kerne zu verbessern.

Die üblicherweise verwendeten Schlichten enthalten als feuerfeste Grundstoffe z.B. Pyrophyllit, Glimmer, Zirkonsilikat, Andalusit, Schamotte, Eisenoxid, Kyanit, Bauxit, Olivin, Aluminiumoxid, Quarz, Talk, kalzinierte Kaoline (Metakaolin) und oder Graphit alleine oder als Mischungen davon Diese Grundstoffe sind der zweckbestimmende Anteil der Schlichten, welche die Formoberfläche bedecken und die Poren gegen das Eindringen des Gießmetalls schließen.

Durch diese Beschichtungen kann also die Oberfläche der Gießform modifiziert und auf die Eigenschaften des zu verarbeitenden Metalls abgestimmt werden. So kann durch die Schlichtezusammensetzung das Aussehen des Gussstücks verbessert werden, indem eine glatte Oberfläche erzeugt wird, da durch die Schlichtezusammensetzung Unregelmäßigkeiten ausgeglichen werden, die durch die Größe der Körner des Formstoffs verursacht werden. Weiter kann die Schlichtezusammensetzung das Gussstück metallurgisch beeinflussen, indem beispielsweise über die Schlichtezusammensetzung selektiv an der Oberfläche des Gussstücks Zusätze in das Gussstück übertragen werden, welche die Oberflächeneigenschaften des Gussstücks verbessern. Ferner bilden die Schlichten eine Schicht, welche die Gießform beim Gießen vom flüssigen Metall schützt. Dadurch wird jegliche Haftung zwischen Gussstück und Gießform verhindert, sodass sich das Gussstück leichter aus der Gießform entfernen lässt.

Die Schlichtezusammensetzung kann aber auch dazu genutzt werden, die Wärmeübertragung zwischen flüssigem Metall und Gießform gezielt zu steuern, um beispielsweise durch die Abkühlungsrate die Ausbildung eines bestimmten Metallgefüges zu bewirken.

In der DE 102011115024 A1 werden Ameisensäureester, in denen der Alkoholrest zwischen C1- bis C8- Atomen lang sein kann, vorgeschlagen. Diese erhöhen die Festigkeiten der mit dieser Schlichtezusammensetzung behandelten Kerne.

DE 102005041863 A1 beschreibt ein Beispiel einer Schlichte, welche anorganische oder organische Säuren enthält.

Keines der weiter oben zitierten Dokumente berichtet über die Verwendung von CH-aciden Substanzen in der Schlichte, wie in den Ansprüchen bezeichnet.

### Aufgabe der Erfindung

Die Erfinder haben sich zur Aufgabe gestellt, eine wasserbasierte Schlichtezusammensetzung zur Verfügung zu stellen, die in allen gängigen Kernherstellungsverfahren einsetzbar ist ,die Gussfehler zuverlässig reduziert und die zu einer verbesserten Feuchtebeständigkeit der damit beschichteten Kernen und Formen führt. Durch die erhöhte Feuchtebeständigkeit kann in vielen Fällen weniger Formstoff-Bindemittel eingesetzt werden. Weiterhin wird die Formaldehyd-Emission reduziert, wenn Bindemittel enthaltend Formaldehyd als Restmonomer und/oder solche Bindemittel, die Formaldehyd freisetzen, in der Formstoffmischung eingesetzt werden, insbesondere während der Trocknung der Schlichte unter Erwärmung.

### Zusammenfassung der Erfindung

Gegenstand der Erfindung ist eine Schlichtezusammensetzung für Formen oder Kerne für den Metallguss enthaltend zumindest eine CH-acide Verbindung wie in Anspruch 1 definiert und mit der Schlichtezusammensetzung versehene Formen oder Kerne. Weiterhin betrifft die Erfindung ein Verfahren zur Herstellung von Formen und Kernen unter Verwendung von Formstoffmischungen und Beschichtungen der zumindest teilweise zu Formen oder Kernen ausgehärteten Formstoffmischungen mit der Schlichtezusammensetzung sowie nach diesem Verfahren hergestellte beschichtete Formen und Kerne wie in den unabhängigen Patentansprüchen bezeichnet. Vorteilhafte Ausgestaltungen sind Gegenstand der Unteransprüche oder nachfolgend beschrieben.

Überraschenderweise wurde gefunden, dass sich bei Verwendung bestimmter CH-acider Verbindungen in der Schlichtezusammensetzung die Feuchtebeständigkeit von geschlichteten und getrockneten Kernen deutlich verbessern kann. Somit eröffnet sich die Möglichkeit, dünnere Kempartien bei derselben Festigkeit zu designen und/oder wasserbasierte Schlichten auch in klimatisch ungünstigeren Regionen (hohe Luftfeuchtigkeit) zu verwenden. Eine verbesserte Feuchtebeständigkeit der Kerne erlaubt es auch, weniger Kemsandbindemittel zu verwenden, welches sich positiv auf die Emissionen und das Gasaufkommen auswirkt. Diese bietet nicht nur einen ökologischen, sondern auch einen ökonomischen Vorteil.

Die Formstoffmischungen umfassen zumindest:
- einen feuerfesten Formgrundstoff,
- ein Bindemittel bzw. Bindemittelsystem und
- ggf. ein oder mehrere Formstoff-Additive.

Die mit dieser Formstoffmischung hergestellten Kernen und Formen, werden erhalten durch
- Selbsthärtung, z.B.
   a. durch im Bindemittel enthaltenen Katalysator (z.B. flüssige Amine) oder
   b. der Formstoffmischung zugesetztem Katalysator in flüssiger Form z.B. Carbonate, Ester, oder Säuren (je nach Verfahren)
- einen Begasungsvorgang mittels tertiärem Amin, CO₂, SO₂ oder Methylformiat (je nach Verfahren), oder
- Heißhärtung, z.B. bei Temperaturen über 80°C und insbesondere über 100°C.

Die somit hergestellten, zumindest teilweise ausgehärteten Kerne und Formen werden dann zumindest auf Teilflächen mit der erfindungsgemäßen Schlichtezusammensetzung in Form eines Überzuges oder einer Beschichtung versehen. Die Schlichtezusammensetzung kann durch Sprühen, Streichen, Tauchen oder Fluten mit dem Kern oder der Form in Kontakt gebracht werden. Die Schlichtezusammensetzung ist im Gebrauchszustand eine Flüssigkeit mit in dieser suspendierten Feststoffen.

Zur Entfernung der Trägerflüssigkeit in der Schlichte, in der Regel Wasser oder niedrigsiedende Alkohole, wird diese an der Luft oder bei erhöhter Temperatur von 60°C bis 220°C, insbesondere 100 bis 200°C vorzugsweise 120 bis 180°C, z.B. in einem Durchlauf- oder Chargen Ofen, mittels IR Strahler oder Mikrowelle getrocknet.

### Detaillierte Beschreibung der Erfindung

Überraschend wurde gefunden, dass bei Zugabe der CH-acider Verbindungen wie in Anspruch 1 definiert
zu einer wässrigen- oder alkoholhaltigen, vorzugsweise wässrigen, Schlichtezusammensetzung die Qualität der geschlichteten Kerne und Formen nachhaltig verbessert werden kann, und beispielsweise eine Lagerstabilität der Kerne und Formen von mehreren Tagen problemlos erreicht werden kann. Geeignet sind alle Verbindungen, die zumindest eine -CH₂- Gruppe aufweisen, die von Carbonyl-Kohlenstoffatomen (C=O) umgegeben ist.

Die erfindungsgemäß eingesetzten CH-aciden Verbindungen sind somit beta-Dicarbonylverbindungen (1,3- Dicarbonylverbindungen) wie in Anspruch 1 definiert.

Insbesondere weisen die beta-Dicarbonylverbindungen folgende Struktur: 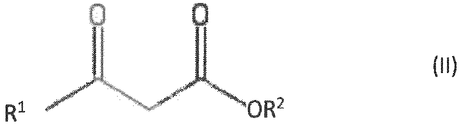 auf, worin
- R¹: die Bedeutung von oben hat, und insbesondere ein C1- bis C18- Kohlenwasserstoff ist, vorzugsweise ein C1- bis C12- Kohlenwasserstoff, und
- R²: H,
ein C1- bis C18- Kohlenwasserstoff, vorzugsweise ein C1- bis C12- Kohlenwasserstoff ist, wobei ggfs. 1 bis 3 Sauerstoffatome in dem Kohlenwasserstoff enthalten sein können, beispielsweise in Form von Ethergruppen. Beispiele für R² sind Alkyl, Alkenyl, Aryl, Alkoxy, Alkenyloxy oder Aryloxy.

Ebenfalls ist es möglich, dass die beta-Dicarbonyl-Verbindung eine Verbindung ist, die mehrere beta Dicarbonyl-Gruppen (I) aufweist, z.B. 2 bis 4, insbesondere solche nach Formel (II), die über R² verknüpft sind und somit mehrere CH-acide Gruppen im Molekül aufweisen (vergleiche z.B. CAS: 22208-25-9).

CH-Acidität ist die Neigung einer Verbindung, das an einem Kohlenstoff-Atom gebundene Wasserstoff-Atom als Proton abzugeben und damit formal als Säure zu agieren. Unsubstituierte Alkane weisen hohe pKs-Werte auf (z.B. ca. 50 für Ethan). Ist das Kohlenstoffatom jedoch an stark elektronenziehende Gruppen wie Carbonyle (in einem Ester, Keton oder Aldehyd) α-ständig zu diesen Gruppen gebunden, so sorgt der stark ausgeprägte negative induktive Effekt dafür, dass die CH-Bindung am α-Kohlenstoffatom stärker polarisiert und das Proton leichter abspaltbar wird. Nach der vorliegenden Erfindung ist der pKs-Wert der CH-aciden CH₂-Gruppe vorzugsweise kleiner 15, insbesondere 5 bis 12 (jeweils bei 298 K und in Bezug auf die Abgabe des ersten Protons, pKs₁).

Besonders bevorzugt sind beta-Ketoester. Beispielhaft genannt seien folgende beta-Ketoester

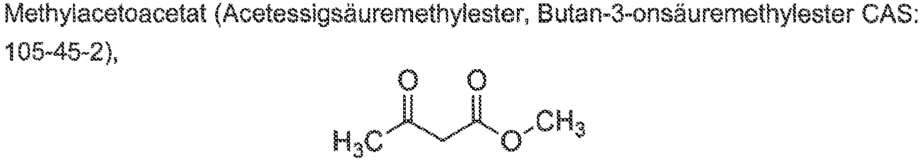

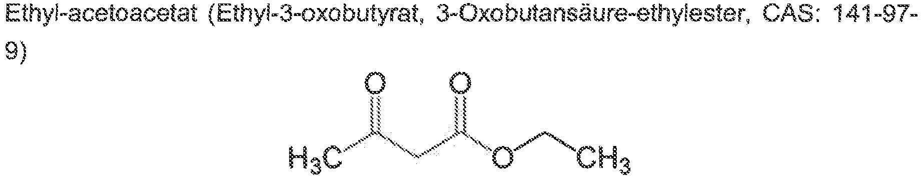

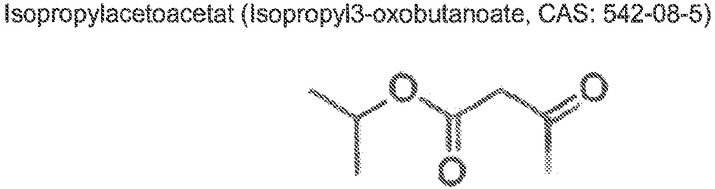

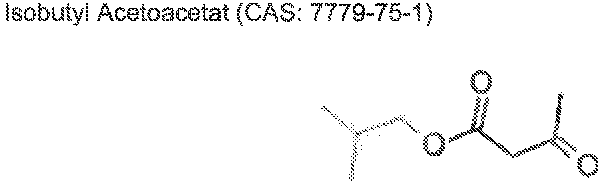

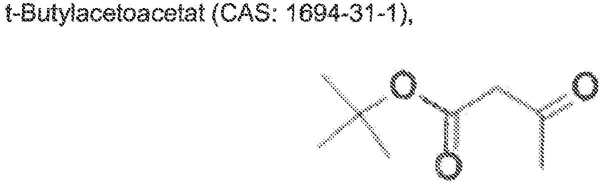

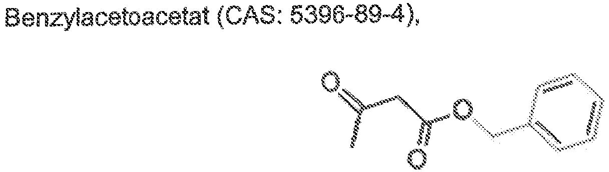

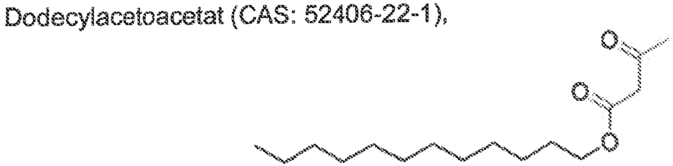

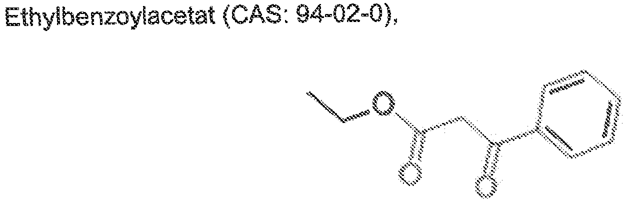

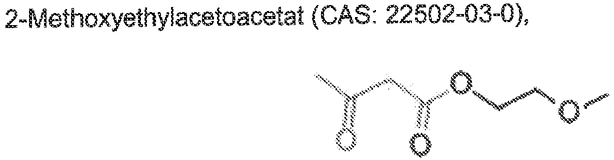

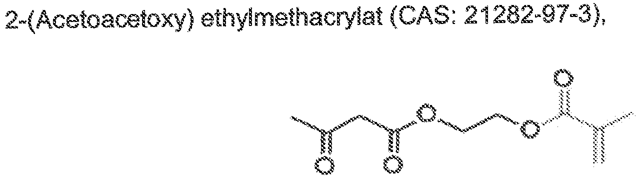

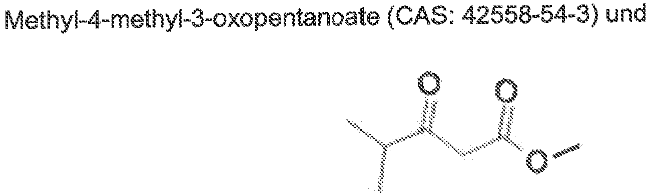

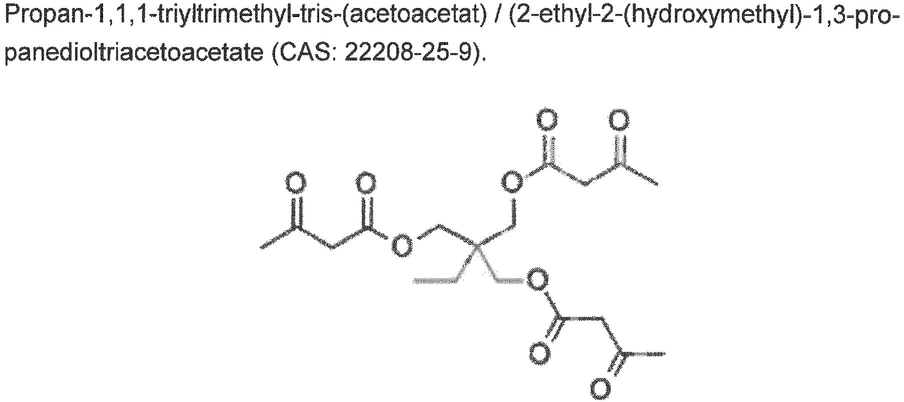

Bevorzugt sind Malonsäure, Malonsäure Mono- und Diester von Alkoholen mit einer C-Kette von C1 bis C18, Methylacetoacetat, Ethylacetoacetat, Benzylacetoacetat, Dodecylacetoacetat, Ethylbenzoylacetat, 2-Methoxyethylacetoacetat, 2-(Acetoacetoxy)ethylmethacrylat und Propan-1,1,1-triyltrimethyl-tris-(acetoacetat). Besonders bevorzugt sind Methlyacetoacetat, Ethylacetoacetat und Propan-1,1,1-triyltrimethyltris-(acetoacetat). Insbesondere bevorzugt sind Methylacetoacetat und Ethylacetoacetat. Mischungen untereinander sind ebenfalls möglich.

Die Schlichtezusammensetzung weist z.B. einen pH-Wert von 6 bis 10, vorzugsweise 6,5 bis 8,5 (bei 298 K) auf.

Der Gesamtgehalt der CH-aciden Verbindungen, bezogen auf die Schlichte im Verkaufs und/oder Anwendungszustand, d.h. unabhängig von der Verdünnung, beträgt dabei 0,1 bis 10 Gew.%, bevorzugt 0,5 bis 8 Gew.%, besonders bevorzugt 0,5 bis 7 Gew.%, insbesondere bevorzugt 0,7 - 5 Gew.% oder auch 0,8 - 3 Gew.%.

Die CH-acide Verbindung kann in der fertig ausgelieferten Schlichtezusammensetzung enthalten sein oder während des fakultativen Verdünnungsprozesses zur Herstellung der gebrauchsfertigen Schlichtezusammensetzung zugesetzt werden. Der Zusatz der CH-aciden Verbindung verändert nur geringfügig bis gar nicht die bekannten weiteren Schlichteigenschaften.

Je nach gewünschter Verwendung der Schlichtezusammensetzung, z.B. als Grundbeschichtung oder als Deckbeschichtung, und gewünschter Schichtdicke der aus der Schlichtezusammensetzung hergestellten Beschichtung können weitere charakteristische Parameter der Schlichtezusammensetzung eingestellt werden.

Die Trägerflüssigkeit kann anteilig oder vollständig von Wasser gebildet sein. Die Trägerflüssigkeit ist der Bestandteil, der bei 160°C und Normaldruck (1013 mbar) verdampfbar ist und in diesem Sinne vorliegend definitionsgemäß, das was nicht Feststoffgehalt ist. Die Trägerflüssigkeit enthält zu größer 50 Gew.%, vorzugsweise 75 Gew.%, insbesondere größer 80 Gew.%, ggf. größer 95 Gew.% Wasser.

Die weiteren Bestandteile in der Trägerflüssigkeit können organische Lösungsmittel sein. Geeignete Lösungsmittel sind Alkohole, einschließlich Polyalkoholen und Polyetheralkoholen. Beispielhafte Alkohole sind Ethanol, n-Propanol, Isopropanol, n-Butanol, Glykole, Glykolmonoether und Glykolmonoester.

Der Feststoffgehalt der gebrauchsfertigen Schlichtezusammensetzung wird vorzugsweise im Bereich von 10 bis 70 Gew.% eingestellt, bzw. in der Verkaufsform (vor Verdünnung) insbesondere 30 bis 80 Gew.%. Die Schlichtezusammensetzung umfasst zumindest 20 Gew.% Trägerflüssigkeit, vorzugsweise größer 40 Gew.%.

So umfasst die erfindungsgemäße Schlichtezusammensetzung zumindest einen vor Zugabe zur Schlichtezusammensetzung pulverförmigen feuerfesten Grundstoff. Der feuerfeste Grundstoff dient dazu, die Poren in einer Gießform gegen das Eindringen des flüssigen Metalls zu verschließen. Weiter wird durch den feuerfesten Grundstoff eine thermische Isolierung zwischen Gießform und flüssigem Metall erreicht. Als feuerfeste Grundstoffe sind insbesondere Materialien geeignet, welche einen Schmelzpunkt aufweisen, der zumindest 200°C oberhalb der Temperatur des zu gießenden flüssigen Metalls liegt (mindestens größer 900°C) und unabhängig hiervon möglichst keine Reaktion mit dem Metall eingeht.

Als feuerfeste Grundstoffe (für die Schlichte) können z.B. Pyrophyllit, Glimmer, Zirkonsilikat, Andalusit, Schamotte, Eisenoxid, Kyanit, Bauxit, Olivin, Aluminiumoxid, Quarz, Talk, kalzinierte Kaoline (Metakaolin) und/oder Graphit alleine oder als Mischungen davon eingesetzt werden.

Bevorzugt kann beim Ton der Durchgangsanteil D10 von 0,01 µm bis 5 µm, weiter bevorzugt von 0,01 µm bis 1 µm, besonders bevorzugt von 0,01 µm bis 0,2 µm für die Korngröße betragen. Bevorzugt kann der Ton einen Durchgangsanteil D01 von 0,001 µm bis 0,2 µm, weiter bevorzugt von 0,001 µm bis 0,1 µm, besonders bevorzugt von 0,001 µm bis 0,05 µm für die Korngröße aufweisen.

Für Glimmer beträgt vorzugsweise der Durchgangsanteil D90 von 100 µm bis 300 µm, weiter bevorzugt von 150 µm bis 250 µm, besonders bevorzugt von 200 µm bis 250 µm betragen. Bevorzugt kann der Durchgangsanteil D50 des Glimmers von 45 µm bis 125 µm, weiter bevorzugt von 63 µm bis 125 µm, besonders bevorzugt von 75 µm bis 125 µm betragen. Bevorzugt kann der Durchgangsanteil D10 eine Korngröße von 1 µm bis 63 µm, weiter bevorzugt von 5 µm bis 45 µm, besonders bevorzugt von 10 µm bis 45 µm aufweisen. Bevorzugt kann der Durchgangsanteil D01 von 0,1 µm bis 10 µm, weiter bevorzugt von 0,5 µm bis 10 µm, besonders bevorzugt von 1 µm bis 5 µm betragen.

Weiterhin ist die Korngröße weiterer Feuerfeststoffe nicht besonders beschränkt, jegliche übliche Korngrößen von 1 µm bis 300 µm, besonders bevorzugt von 1 µm bis 280 µm sind verwendbar.

Die Korngrößenverteilung der einzelnen Feststoff-Bestandteile der Schlichtezusammensetzung kann anhand der Durchgangsanteile D90, D50, D10 und D01 bestimmt werden. Diese sind eine Maßzahl für die Teilchengrößenverteilung. Hierbei bezeichnen die Durchgangsanteile D90, D50, D10 bzw. D01 die Anteile in 90 %, 50 %, 10 % bzw. 1 % der Teilchen, welche kleiner sind als der bezeichnete Durchmesser. Bei einem D10-Wert von beispielsweise 5 µm weisen 10% der Teilchen einen Durchmesser von weniger als 5 µm auf. Die Korngröße und die Durchgangsanteile D90, D50, D10 und D01 können mittels Laserbeugungsgranulometrie gemäß ISO13320 bestimmt werden. Angegeben sind die Durchgangsanteile auf Volumen-Basis. Bei nicht kugelförmigen Teilchen wird eine hypothetische kugelförmige Korngröße errechnet und der entsprechende Durchmesser zugrunde gelegt. Die Korngröße ist somit mit dem errechneten Durchmesser gleichzusetzen.

Der Partikeldurchmesser und deren Verteilung wird durch Laserbeugung in einem Wasser/isopropanol-Gemisch bestimmt, wobei die Suspension (nur) durch Rühren erhalten wird, mit einem Laser-Streulichtspektrometer Horiba LA-960 der Firma Retsch auf Grundlage der statischen Laserlichtstreuung (gemäß DIN/ISO 13320) und durch Auswertung unter Verwendung des Fraunhofer Modells bestimmt.

Die Korngröße wird dabei insbesondere so gewählt, dass in der Beschichtung ein stabiles Gefüge entsteht und dass sich die Schlichtezusammensetzung z.B. mit einer Sprühvorrichtung problemlos auf der Wand der Gießform verteilen lässt.

Der Anteil des feuerfesten Grundstoffes, bezogen auf den Feststoffanteil der Schlichtezusammensetzung, wird vorzugsweise größer als 65 Gew.%, bevorzugt größer als 70 Gew.%, besonders bevorzugt größer als 80 Gew.% gewählt

Die erfindungsgemäße Schlichtezusammensetzung kann gemäß einer Ausführungsform mindestens ein Stellmittel umfassen. Das Stellmittel bewirkt eine Erhöhung der Viskosität der Schlichte, so dass die festen Bestandteile der Schlichtezusammensetzung in der Suspension nicht bzw. nur in geringem Ausmaß absinken. Zur Erhöhung der Viskosität können sowohl organische als auch anorganische Materialien oder Gemische dieser Materialien eingesetzt werden.

Als Stellmittel können quellfähige Schichtsilikate enthalten sein, welche zur Einlagerung von Wasser zwischen den Schichten befähigt sind; Bevorzugt kann das quellfähige Schichtsilikat aus Attapulgit (Palygorskit), Serpentinen, Kaolinen, Smektiten (wie Saponit, Montmorillonit, Beidellit und Nontronit), Venmiculit, Illit, Spiolith, synthetisches Lithium-Magnesium Schichtsilikat, LAPONITE^{®} RD und Gemischen davon ausgewählt sein, besonders bevorzugt sind Attapulgit (Palygorskit), Serpentinen, Smektite (wie Saponit, Beidellit und Nontronit), Vermiculit, Illit, Spiolith, synthetisches Lithium-Magnesium Schichtsilikat, LAPONlTE^{®} RD und Gemischen davon, insbesondere bevorzugt kann das quellfähige Schichtsilikat Attapulgit sein.

Als Stellmittel können alternativ oder ergänzend auch organische Verdickungsmittel ausgewählt sein, da diese nach dem Aufbringen der Schutzbeschichtung soweit getrocknet werden können, dass sie beim Kontakt mit dem flüssigen Metall kaum noch Wasser abgeben. Als organische Stellmittel kommen beispielsweise quellfähige Polymere in Frage, wie Carboxymethyl-, Methyl-, Ethyl-, Hydroxyethyl- und Hydroxypropy-Icellulose, Pflanzenschleime, Polyvinylalkohole, Polyvinylpyrrolidon, Pektin, Gelatine, Agar Agar, Polypeptide und/oder Alginate.

Der Anteil der anorganischen Stellmittel, bezogen auf die gesamte Schlichtezusammensetzung, wird vorzugsweise mit 0,1 bis 5 Gew.%, bevorzugt 0,5 bis 3 Gew.%, besonders bevorzugt 1 bis 2 Gew.% gewählt.

Der Anteil der organischen Stellmittel, bezogen auf die gesamte Schlichtezusammensetzung, wird vorzugsweise mit 0,01 bis 1 Gew.%, bevorzugt 0,01 bis 0,5 Gew.%, besonders bevorzugt 0,01 bis 0,1 Gew.% gewählt.

Die Schlichtezusammensetzung kann z.B. die Kombination bestimmter Tone als Inhaltsstoffe der Schlichten umfassen, die auch als Stellmittel fungieren. Als Ton-Materialien besonders geeignet ist eine Kombination von
a) 1 bis 4 Gewichtsteilen, insbesondere 1 bis 2,2 Gewichtsteilen Palygorskit,
b) 1 bis 4 Gewichtsteilen, insbesondere 1 bis 2,2 Gewichtsteilen, Hectorit und
c) 1 bis 4 Gewichtsteilen, insbesondere 1 bis 2,2 Gewichtsteilen, Natriumbentonit,
(jeweils relativ zueinander) verwendet, insbesondere in einem Gewichtsverhältnis Palygorskit zu Hectorit von 1 zu 0,8 bis 1,2 und einem Verhältnis von Palygorskit zu Hectorit gemeinsam zu Natriumbentonit von 1 zu 0,8 bis 1,2.

Der Gesamttongehalt der Schlichtezusammensetzung an obigen Tonen beträgt dabei 0,1 bis 4,0 Gew.%, bevorzugt 0,5 bis 3,0 % Gew. und besonders bevorzugt 1,0 bis 2,0 Gew.%, bezogen auf den Feststoffgehalt der Schlichtezusammensetzung.

Gemäß einer bevorzugten Ausführungsform wird eine Schlichtezusammensetzung, umfassend eine Feststoffkomponente, die einen Ton und Glimmer umfasst, wobei der Ton von 50 bis 90 Gewichts-% Kaolinit und von 5 bis 35 Gewichts-% Montmorillonit umfasst, wobei die Schlichtezusammensetzung, bezogen auf die Feststoffkomponente, 5 bis 50 Gewichtsteile Ton umfasst, verwendet.

Gemäß einer bevorzugten Ausführungsform umfasst die erfindungsgemäße Schlichtezusammensetzung als weiteren Bestandteil zumindest ein Bindemittel. Das Bindemittel ermöglicht eine bessere Fixierung der Schlichtezusammensetzung bzw. des aus der Schlichtezusammensetzung hergestellten Schutzüberzugs auf der Wand der Gießform. Außerdem wird durch das Bindemittel die mechanische Stabilität der Schlichtebeschichtung erhöht, so dass eine geringere Erosion unter der Einwirkung des flüssigen Metalls beobachtet wird. Vorzugsweise härtet das Bindemittel irreversibel aus, so dass eine abriebfeste Beschichtung erhalten wird. Insbesondere bevorzugt sind Bindemittel, die bei Kontakt mit Luftfeuchtigkeit nicht rückerweichen. Als Bindemittel können beispielsweise Tone eingesetzt werden, insbesondere Bentonit und/oder Kaolin. Weitere geeignete Bindemittel sind beispielsweise Stärke, Dextrin, Peptide, Polyvinylalkohol, Polyvinylacetatcopolymre, Polyacrylsäure, Polystyrol, Polyvinytacetat-Polyacrylatdispersionen und Gemische davon.

Der Anteil des Bindemittels wird bevorzugt im Bereich von 0,1 bis 20 Gew.%, besonders bevorzugt 0,5 bis 5 Gew.% und insbesondere bevorzugt 0,2 bis 2 Gew.%, bezogen auf den Feststoffgehalt der Schlichtezusammensetzung gewählt.

Gemäß einer weiteren bevorzugten Ausführungsform enthält die Schlichtezusammensetzung einen Anteil an Graphit. Dieser unterstützt die Ausbildung von Lamellenkohlenstoff an der Grenzfläche zwischen Gussstück und Gießform. Der Anteil des Graphits wird vorzugsweise im Bereich von 0 bis 30 Gew.%, bevorzugt 1 bis 25 Gew.%, und insbesondere bevorzugt von 1 bis 20 Gew.% bezogen auf den Feststoffgehalt der Schlichtezusammensetzung, gewählt. Graphit wirkt sich beim Eisenguss günstig auf die Oberflächenquaiftät des Gussstückes aus.

Als Netzmittel können beispielsweise anionische und nicht-anionische Tenside, insbesondere solche mit einem HLB-Wert von mindestens 7 eingesetzt werden. Ein Beispiel für ein derartiges Netzmittel ist Dinatrium-dioctylsulfosuccinat. Das Netzmittel wird vorzugsweise in einer Menge von 0,01 bis 1 Gew.%, bevorzugt 0,05 bis 0,3 Gew.%, bezogen auf die gebrauchsfertige Schlichtezusammensetzung eingesetzt.

Entschäumer, oder auch Antischaummittel genannt, können verwendet werden, um bei der Herstellung der Schlichtezusammensetzung oder beim Auftragen derselben eine Schaumbildung zu verhindern. Schaumbildung beim Auftragen der Schlichtezusammensetzung kann zu einer ungleichmäßigen Schichtdicke und zu Löchern in der Beschichtung führen. Als Entschäumer können beispielsweise Silikon- oder Mineralöl verwendet werden. Vorzugsweise ist der Entschäumer in einer Menge von 0,01 bis 1 Gew.%, bevorzugt von 0,05 bis 0,3 Gew.% enthalten, bezogen auf die gebrauchsfertige Schlichtezusammensetzung.

In der erfindungsgemäßen Schlichtezusammensetzung können gegebenenfalls übliche Pigmente und Farbstoffe verwendet werden. Diese werden zugesetzt, um einen anderen Kontrast, z.B. zwischen verschiedenen Schichten zu erreichen, beziehungsweise einen stärkeren Trenneffekt der Schlichte vom Guss zu bewirken. Beispiele für Pigmente sind rotes und gelbes Eisenoxid sowie Graphit. Beispiele für Farbstoffe sind handelsübliche Farbstoffe wie die Luconyl^{®} Farbreihe der BASF SE. Die Farbstoffe und Pigmente sind vorzugsweise in einer Menge von 0,01 bis 10 Gew.%, vorzugsweise von 0,1 bis 5 Gew.% enthalten, bezogen auf den Feststoffgehalt der Schlichtezusammensetzung.

Gemäß einer weiteren Ausführungsform enthält die Schlichtezusammensetzung ein Biozid, um einen bakteriellen Befall zu verhindern und damit einen negativen Einfluss auf die Rheologie und die Bindekraft der Bindungsmittel zu vermelden.

Dies ist insbesondere bevorzugt, wenn die in der Schlichtezusammensetzung enthaltene Trägerflüssigkeit im Wesentlichen in Bezug auf das Gewicht aus Wasser gebildet wird, also die erfindungsgemäße Schlichtezusammensetzung in Form einer sogenannten Wasserschlichte bereitgestellt wird.

Beispiele für geeignete Biozide sind Formaldehyd, Formaldehydabspalter, 2-Methyl-4-isothiazolin-3-on (MIT), 5-Chlor-2-methyl-4-iosthiazolin-3-on (CIT), 1,2-Benzisothiazolin-3-on (BIT) und biozid wirkende Stoffe die Brom- und Nitrilogruppeη enthalten. Die Biozide werden üblicherweise in einer Menge von 10 bis 1000 ppm, vorzugsweise von 50 bis 500 ppm verwendet, bezogen auf das Gewicht der gebrauchsfertigen Schlichtezusammensetzung.

Die erfindungsgemäße Schlichtezusammensetzung kann hergestellt werden, Indem Wasser vorgelegt und hierin ein als Stellmittel wirkender Ton unter Verwendung eines hochscherenden Rührers aufgeschlossen wird. Anschließend werden der feuerfeste Grundstoff, Pigmente (soweit vorhanden) und Farbstoffe (soweit vorhanden) eingerührt, bis eine homogene Mischung entsteht. Zum Schluss werden Netz- (soweit vorhanden), Antischaummittel (soweit vorhanden), Biozide (soweit vorhanden), Bindemittel (soweit vorhanden) und die CH-acide(n) Verbindungen) eingerührt.

Die erflndungsgemäße Schlichtezusammensetzung kann als gebrauchsfertig formulierte Schlichtezusammensetzung hergestellt und vertrieben werden. Die erfindungsgemäße Schlichtezusammensetzung kann aber auch in konzentrierter Form hergestellt und vertrieben werden. In diesem Fall wird zur Bereitstellung einer gebrauchsfertigen Schlichtezusammensetzung die Menge der (weiteren) Trägerflüssigkeit zugegeben, die nötig ist um die gewünschte Viskosität und Dichte der Schlichtezusammensetzung einzustellen. Darüber hinaus kann die erfindungsgemäße Schlichtezusammensetzung auch in Form eines Kits bereitgestellt und vertrieben werden, wobei z.B. die Feststoffkomponenten, die CH-acide(n) Verbindung(en) und die Lösungsmittelkomponente nebeneinander in getrennten Behältnissen vorliegen oder die CH-acide(n) Verbindung(en) Teil der Lösungsmittelkomponente ist. Die Feststoffkomponenten können als pulverförmiges Feststoffgemisch in einem separaten Behältnis bereitgestellt werden. Gegebenenfalls zu verwendende weitere flüssige Komponenten, wie z.B. Bindemittel, Netzmittel, Netzer/Entschäumer, Pigmente, Farbstoffe und Biozide, können in diesem Kit wiederum in einem getrennten Behältnis vorliegen. Die Lösungsmittelkomponente kann entweder die gegebenenfalls zusätzlich zu verwendenden Komponenten umfassen, z.B. in einem gemeinsamen Behältnis, oder sie kann getrennt von weiteren optionalen Bestandteilen in einem separaten Behältnis vorhanden sein.

Es ist auch möglich, mehrere Lagen von Schlichte aufzubringen und zwar entweder mehrlagig jeweils die gleiche Schlichte, um eine gewünschte Schichtdicke herzustellen oder unterschiedliche Schlichten, wobei die Schlichte mit den CH-aciden Verbindungen vorzugsweise die letzte Beschichtung bildet.

Die Trockenschichtdicke der Deckschicht beträgt bspw. 0,01 mm bis 1 mm, bevorzugt 0,05 mm bis 0,8 mm, stärker bevorzugt 0,1 mm bis 0,6 mm und am meisten bevorzugt 0,2 mm bis 0,3 mm.

Die Trockenschichtstärke der Beschichtung wird entweder durch Bemaßen von Biegeriegeln vor und nach dem Schlichten (getrocknet) mit einer Mikrometerschraube (bevorzugt) oder durch Messung mit dem Nassschichtdickenkamm ermittelt. Man kann beispielsweise mit dem Kamm die Schichtdicke bestimmen, indem man die Beschichtung an den Endmarken des Kamms solange wegkratzt, bis der Untergrund zum Vorschein kommt. An den Markierungen der Zähne kann man dann die Schichtdicke ablesen. Man kann stattdessen auch die Naßschichtdicke im abgematteten Zustand nach DIN EN ISO 2808 messen.

Die erfindungsgemäßen Schlichtezusammensetzungen eignen sich zum Beschichten von Gießformen. Der hier verwendete Ausdruck "Gießform" umfasst alle Arten von Körpern, welche zur Herstellung eines Gussstücks notwendig sind, wie etwa Kerne, Formen und Kokillen. Die erfindungsgemäße Verwendung der Schlichtezusammensetzungen umfasst auch ein teilweises Beschichten von Gießformen.

Die Formstoffmischungen zur Herstellung der Gießformen umfassen zumindest:
- einen feuerfesten Formgrundstoff,
- ein Bindemittel bzw. Bindemittelsystem und
- ggf. ein oder mehrere Formstoff-Additive.

Bei den feuerfesten Formgrundstoffen handelt es sich um einen oder ein Gemisch aus mehreren geeigneten feuerfesten Formgrundstoffen, umfassend überwiegend Quarzsand, wobei der Quarzsand als Neusand oder regenerierter Altsand bzw. als eine beliebige Mischung aus beiden vorliegen kann.

Beim Loast Foam- oder Vollformverfahren werden aufgeschäumte Polystyrol- bzw. Copolymere aus Polystyrol und Methacrylat-Modelle mit einer feuerfesten Schlichte überzogen, die dann in Ofen- oder Mikrowellen getrocknet wird. Hier dient die Schlichte ebenfalls dazu, eine Trennschicht zwischen eingefülltem Metall und dem Sand als Hintergrundstabilisierung, aufzubauen. Diese Schlichte kann ebenfalls mit CH-aciden Verbindungen versetzt werden, um die Formaldehyd-Emissionen während des Abgusses zu reduzieren.

Als feuerfester Formgrundstoff können für die Herstellung von Gießformen übliche und bekannte Materialien sowie deren Mischungen verwendet werden. Geeignet sind beispielsweise Quarzsand, Zirkonsand oder Chromerzsand, Olivin, Vermiculit, Bauxit, Schamotte sowie sogenannte künstliche Formgrundstoffe, also Formgrundstoffe, die durch industrielle Verfahren der Formgebung in sphärische oder annähemd sphärische (zum Beispiel ellipsoide) Form gebracht wurden. Beispiele hierfür sind Glasperlen, Glasgranulat oder künstliche, spherische, keramische Sande - sogenannte Cerabeads^{®} aber auch Spherichrome^{®}, SphereOX^{®} oder "Carboaccucasf, sowie Mikrohohlkugeln wie sie unter anderem als Komponente aus Flugaschen isoliert werden können, wie z.B. Aluminiumsilikathohlkugeln (sog. Microspheres). Mischungen der genannten Formgrundstoffe sind ebenfalls möglich.

Unter einem Formgrundstoff bzw. feuerfesten Formgrundstoff werden Stoffe verstanden, die einen hohen Schmelzpunkt (Schmelztemperatur) aufweisen. Vorzugsweise ist der Schmelzpunkt des feuerfesten Formgrundstoffs größer als 600°C, bevorzugt größer als 900°C, besonders bevorzugt größer als 1200°C und insbesondere bevorzugt größer als 1500°C.

Der feuerfeste Formgrundstoff macht vorzugsweise größer 70 Gew.%, insbesondere größer 80 Gew.%, besonders bevorzugt größer 85 Gew.%, der Formstoffmischung aus.

Der mittlere Durchmesser der feuerfesten Formgrundstoffe liegt in der Regel zwischen 80 µm und 600 µm, bevorzugt zwischen 100 µm und 550 µm und besonders bevorzugt zwischen 130 µm und 500 µm. Die Partikelgröße lässt sich z.B. durch Siebung nach DIN ISO 3310 bestimmen. Besonders bevorzugt sind Teilchenformen mit größter Längenausdehnung zu kleinster Längenausdehnung (rechtwinkelig zueinander und jeweils für alle Raumrichtungen) von 1:1 bis 1:5 oder 1:1 bis 1:3, d.h. solche die z.B. nicht faserförmig sind.

Der feuerfeste Formgrundstoff weist vorzugsweise einen rieselfähigen Zustand auf, insbesondere um die erfindungsgemäße Formstoffmischung in üblichen Kernschießmaschinen verarbeiten zu können.

Als Bindemittel sind unterschiedliche anorganische und organische Bindersystemen einsetzbar. Als Beispiele können folgende Verfahren und deren zugehörige Binder genannt werden:
- PU-ColdBox-Verfahren: 2 K-Bindemittel umfassend eine Polyol-(Benzyletherharz) und einer Polyisocyanat-komponente, Härtung: gasförmiges tertiäres Amin
- PU-NoBake-Verfahren: 2 K-Bindemittel umfassend eine Polyol-(Benzyletherharz) und einer Polyisocyanat-Komponente, Härtung: flüssiges Amin
- Resol-CO₂-Verfahren: hochalkalische Phenolresole enthaltend eine Borverbindung, Härtung CO₂
- Resol-Ester-Verfahren: hochalkalische Resole ALPHASET^{™} Verfahren: Härtung: flüssige Ester BETASET^{™} Härtung: gasförmiges Methylformiat
- HotBox-Verfahren: Resole, Furanharze, Harnstoffharze oder Mischharze, Härtung latente Säure plus Hitzeeinwirkung
- WarmBox-Verfahren: Furanharze, Härtung latente Säure plus Hitzeeinwirkung
- Anorg. -Verfahren: Binder auf Silikatbasis, Härtung durch Hitzeeinwirkung oder CO₂
- Shell SandVerfahren: Novolake, Härtung: Hexamethylentriamin und Härtung latente Säure plus Hitzeeinwirkung
- NoBake-Verfahren: Resole, Furanharze oder Mischharze, Säurehärtung
- Epoxy SO₂-Verfahren: Mischung aus Epoxidharzen und Acrylaten, Här tung SO₂-Zugabe
- ISOMAX^{™}: Mischung aus ColdBox Epoxy - Acrylat Hybridbinder und Epoxy SO₂-Verfahren, Härtung: gasförmiges tertiäres Amin (beispielsweise gemäß US 5880175)

Bevorzugt sind Bindemittel aus der Gruppe PU-ColdBox-, PU-NoBake-, Resol-CO₂, Betaset- oder Epoxy-SO₂ - Verfahren.

Die Binder werden dem Formgrundstoff zugemischt. Die Formstoffmischung enthält ggf. weitere Stoffe wie Formstoff-Additive, wie Anti-Blattrippen-Additive.

Als Bindemittel kann jedes der o.g. Bindemittel in einer Menge von ca. 0,4 Gew.% bis ca. 7 Gew.%, bevorzugt von ca. 0,5 Gew.% bis ca. 6 Gew.% und besonders bevorzugt von ca. 0,5 Gew.% bis ca. 5 Gew.%, jeweils bezogen auf die Formstoffmischung, zum Einsatz kommen.

Für die Herstellung der Formstoffmischung können zuerst die Komponenten des Bindemittelsystems vereinigt und dann zu dem feuerfesten Formgrundstoff zugegeben werden. Es ist jedoch auch möglich, die Komponenten des Bindemittels gleichzeitig oder nacheinander in beliebiger Reihenfolge zu dem feuerfesten Formgrundstoff zu geben. Um eine gleichmäßige Mischung der Komponenten der Formstoffmischung zu erzielen, können übliche Verfahren verwendet werden.

### Experimenteller Teil

### Alle Prozent Angaben beziehen sich auf Gew.%

*Eingesetzt wurden:*
*Lieferant ASK-Chemicals GmbH:*
- *ECOCURE^{™} 30 BG 5:*: *Benzyletherharz* in *Estern*
- *ECOCURE^{™}* 60 *BG* 5:: *Polymeres MDI in aromatischen Lösemitteln*
- *ECOCURE^{™} BLUE 30 HE 1:*: *Benzyletherharz in Estern*
- *ECOCURE^{™} BLUE 60 HE 1:*: *Polymeres MDI in Alkylbenzol*
- *KATALYSATOR 706*: *Dimethlypropylamin*
- *MIRATEC^{™} MB 522*: *wasserbasierte Schlichte*
- *MIRATEC*^{™} TS *505*: *wasserbasierte Schlichte*
- *VELVACOAT^{™} AC 501*: *alkoholbasierte Schlichte*
- *NOVANOL^{™} 165*: *alkalisches Phenolresolharz für das Resol*/*CO₂ Verfahren*

*Ethylacetoacetat (EAA)* - *Lieferant Sigma Aldrich*
*Propan-1,1,1-triyltrimethyl-tris-(acetoacetat)(AATMP)* - *Lieferant Sigma Aldrich*
*Malonsäurediethylester (MEE)* - *Lieferant Sigma Aldrich*
*2-(Acetoacetoxy)ethylmethacrylat* - *(AAEMA)* - *Lieferant Sigma Aldrich*
*DBE - Gemisch aus Dimethylsuccinat, Dimethylglutarat und Dimethyladipat (Lieferant Chemoxy)*
*Ethylenharnstoff (EHS)* - *Lieferant BASF SE*
*Additiv X* - *Mischung aus Holzmehl, Koksstaub und Phenolharz*

Bei Verwendung von ^{®} bzw. ^{™} handelt es sich jeweils um zumindest für Deutschland und/oder die USA für die entsprechenden Inhaber eingetragene Marken. Im nachfolgenden Text wurde das ^{®} bzw. ^{™} jeweils verkürzend nicht mehr dargestellt und es wird insofern auf obige Tabelle Bezug genommen.

Herstellung der Schlichten:
Zu der handelsüblichen MIRATEC MB 522 (bzw. einer anderen Schlichte siehe Ergebnistabellen) wurden unter Rühren die in der Ergebnistabelle aufgeführten CH-aciden Verbindungen bzw. die Vergleichssubstanzen eingerührt. Dazu wurde die im Auslieferungszustand erhaltene MIRATEC MB 522 (bzw. einer anderen Schlichte siehe Ergebnistabellen) auf eine für die Anwendung geeignete Viskosität mittels Stadtwasser eingestellt (Ford Becher 4 mm, Auslaufzeit 11-13 sec.) und die CH-acide Verbindung bzw. die Vergleichssubstanzen unter Rühren tropfenweise innerhalb von 10 Minuten eingerührt.

### ColdBox Verfahren:

### Bestimmung der Festigkeiten in N/cm²

In einem Hobart Mischer wurde eine Sandmischung aus Quarzsand H 32, plus 0,60% ECOCURE 30 BG 5 bzw. ECOCURE BLUE 30 HE 1 (jeweils einzeln für die Beispiele A1 bis B25) und 0,60% ECOCURE 60 BG 5 bzw. ECOCURE BLUE 60 HE 1 (jeweils einzeln für die Beispiele A1 bis B25) homogen über 2 Minuten vermischt. Diese Sandmischung wurde in eine Kernschießmaschine Modell Roeper H 1 überführt und es wurden jeweils zwei Kerne mit einer Dimension (l x b x h) von 220 mm x 22,4 mm x 22,4 mm mit einem Schießdruck von 4 bar mittels Druckluft in die Form gebracht. Mittels KATALYSATOR 706 (0,5 ml, Begasungszeit 10 sec bei 2 bar Spüldruck) wurde der Sand ausgehärtet.

Nach dem Aushärten wurde der Kern entnommen und zur Ermittlung der Schlichtebeständigkeit wurde ein 10 Minuten alter Kern In die aufgerührte Schlichtezusammensetzung für 4 sec getaucht. Nach 30 Minuten Wartezeit bei Raumtemperatur wurde das Kempaar nach dem Schlichten für 30 Minuten bei 150°C in einem Umlufttrockenofen getrocknet. Die erkalteten Kerne wurden dann bei Raumtemperatur (20-25°C) und In einer abgeschlossenen Box in einer mit wasserdampfgesättigten Atmosphäre (98% relativer Luftfeuchte, Abkürzung rLF) für x Stunden (h) gelagert. Nach den in den Ergebnistabellen definierten Zeiträumen wurde ein Kempaar entnommen und mit Hilfe des Multlserw Geräts (Firma Morek) die Biegefestigkeit bestimmt.

**Tabelle 1**

| | Vergleich | | | | |
|---|---|---|---|---|---|
| | A1 | A2 | A3 | | |
| Zusatz in Schlichte | keiner | 2% DBE | 2% EHS | | |
| 24h 98% rLF | 250 | 251 | 248 | | |
| | | | | | |

| | erfindungsgemäß | | | | |
|---|---|---|---|---|---|
| | B1 | B2 | B3 | B4 | B5 |
| Zusatz in Schlichte | 1 % EAA | 2% EAA | 3% EAA | 4% EAA | 5% EAA |
| 24h 98% rLF | 265 | 268 | 286 | 295 | 310 |

Tabelle 1 zeigt die Festigkeiten in N/cm² von geschlichteten Kernen, die mit dem Bindersystem ECOCURE 30 BG 5 / ECOCURE 60 BG 5 hergestellt wurden. Bei der Schlichte handelt es sich um die MIRATEC MB522, die unmodifiziert bzw. mit erfindungsgemäßen oder nicht-erfindungsgemäßen Substanzen modifiziert wurde.

**Tabelle 2**

| | Vergleich | | | | |
|---|---|---|---|---|---|
| | A1 | A2 | A3 | | |
| Zusatz in Schlichte | keiner | 2% DBE | 2% EHS | | |
| 24h 98% rLF | 250 | 251 | 248 | | |

| | erfirdungsgemäß | | | | |
|---|---|---|---|---|---|
| | B 6 | B 7 | B 8 | B 9 | B 10 |
| Zusatz in Schlichte | 1% : AATMP | 2% AATMP | 1% AA-EMA | 2% AA-EMA | 2% MEE |
| 24h 98% rLF | 293 | 313 | 327 | 335 | 318 |

Tabelle 2 zeigt die Festigkelten In N/cm² von geschlichteten Kernen, die mit dem Bindersystem ECOCURE 30 BG 5 / ECOCURE 60 BG 5 hergestellt wurden. Bei der Schlichte handelt es sich um die MIRATEC MB522, die unmodifiziert bzw. mit erfindungsgemäßen oder nicht-erfindungsgemäßen Substanzen modifiziert wurde.

**Tabelle 3**

| | Vergleich | | | | |
|---|---|---|---|---|---|
| | A4 | A5 | A6 | | |
| Zusatz in Schlichte | keiner | 2% DBE | 2% EHS | | |
| 96h 98% rLF | 297 | 296 | 282 | | |
| | | | | | |

| | erfindungsgemäß | | | | |
|---|---|---|---|---|---|
| | B 11 | B 12 | B 13 | B 14 | B 15 |
| Zusatz in Schlichte | 1% EAA | 2% EAA | 3% EAA | 4% EAA | 5% EAA |
| 96h 98% rLF | 308 | 315 | 327 | 335 | 342 |

Tabelle 3 zeigt die Festigkeiten in N/cm² von geschlichteten Kernen, die mit dem Bindersystem ECOCURE BLUE 30 HE 1 / ECOCURE BLUE 60 HE 1 hergestellt wurden. Bei der Schlichte handelt es sich um die MIRATEC MB522, die unmodifiziert bzw. mit erfindungsgemäßen oder nicht-erfindungsgemäßen Substanzen modifiziert wurde.

**Tabelle 4**

| | Vergleich | | | | |
|---|---|---|---|---|---|
| | A4 | A5 | A 6 | | |
| Zusatz in *Schlichte* | keiner | 2% DBE | 2% EHS | | |
| 96h 98% rLF | 297 | 296 | 282 | | |

| | erfnidungsgemäß | | | | |
|---|---|---|---|---|---|
| | B 16 | B 17 | B 18 | B 19 | B 20 |
| Zusatz in Schlichte | 1% AATMP | 2% AATMP | 1% AA-EMA | 2% AA-EMA | 2% : MEE |
| 96h 98% rLF | 329 | 340 | 322 | 337 | 329 |

Tabelle 4 zeigt die Festigkeiten In N/cm² von geschlichteten Kernen, die mit dem Bindersystem ECOCURE BLUE 30 HE 1 / ECOCURE BLUE 60 HE 1 hergestellt wurden. Bei der *Schlichte* handelt es sich um die MIRATEC MB522, die unmodifiziert bzw. mit erfindungsgemäßen oder nicht-erfindungsgemäßen Substanzen modifiziert wurde.

**Tabelle 5**

| | Vergleich | | | | |
|---|---|---|---|---|---|
| | A7 | A8 | A9 | | |
| Zusatz in Schlichte | keiner | 2% DBE | 2% EHS | | |
| 96h 98% rLF | 285 | 288 | 275 | | |
| | | | | | |

| | erfindungsgemäß | | | | |
|---|---|---|---|---|---|
| | B 21 | B 22 | B 23 | B 24 | B 25 |
| Zusatz in Schlichte | 1% EAA | 2% EAA | 3% EAA | 4% EAA | 5% EAA : |
| 96h 98% rLF | 304 | 312 | 328 | 338 | 349 |

Tabelle 5 zeigt die Festigkeiten In N/cm² von geschlichteten Kernen, die mit dem Bindersystem ECOCURE BLUE 30 HE 1 / ECOCURE BLUE 60 HE 1 hergestellt wurden. Bei der Schlichte handelt es sich um die MIRATEC TS 505, die unmodifiziert bzw. mit erfindungsgemäßen oder nicht-erfindungsgemäßen Substanzen modifiziert wurde.

### Resol/CO₂ Verfahren:

### Bestimmung der Festigkeiten in N/cm²

In einem Hobart Mischer wurde eine Sandmischung aus Quarzsand H 32, plus 2,5% Novanol 165 über 2 Minuten vermischt. Diese Sandmischung wurde in eine Kernschießmaschine Modell Roeper H 1 überführt und es wurden jeweils zwei Kerne mit einer Dimension (l × b × h) von 220 mm x 22,4 mm x 22,4 mm mit einem Schießdruck von 4 bar mittels Druckluft In die Form gebracht. Mittels CO₂ Gas (Begasungszeit 30 sec bei 2 bar Spüldruck) wurde der Sand ausgehärtet. Nach dem Aushärten wurde der Kern entnommen und zur Ermittlung der Schlichtebeständigkeit wurde ein 60 Minuten alter Kern in die Schlichtezusammensetzung für 4 sec getaucht. Nach 30 Minuten Wartezeit bei Raumtemperatur wurde das Kempaar nach dem Schlichten für 30 Minuten bei 150°C in einem Umlufttrockenofen getrocknet. Die erkalteten Kerne wurden dann bei Raumtemperatur (20-25°C) und in einer abgeschlossenen Box in einer mit wasserdampfgesättigten Atmosphäre (98% relativer Luftfeuchte - Abkürzung rLF) für x Stunden (h) gelagert. Nach definierten Zeiträumen wurde ein Kempaar entnommen und mit Hilfe des Multiserw Geräts (Firma Morek) die Biegefestigkeit bestimmt.

### Alkoholschlichte VELVACOAT AC 501:

Nach dem Aushärten wurde der Kern entnommen und zur Ermittlung der Schlichtebeständigkeit wurde ein 60 Minuten alter Kern in die aufgerührte Schlichte VELVACOAT AC 501 bzw. in die mit CH aciden Substanzen modifizierte VELVACOAT AC 501 getaucht. Nach Abdampfen des Alkohols bei Raumtemperatur wurde das Kernpaar in eine abgeschlossenen Box in einer mit wasserdampfgesättigten Atmosphäre (98% relativer Luftfeuchte, Abkürzung rLF) für x Stunden (h) gelagert. Nach definierten Zeiträumen wurde ein Kernpaar entnommen und mit Hilfe des Multiserw Geräts (Firma Morek) die Biegefestigkeit bestimmt.

**Tabelle 6**

| | Vergleich | | | erfindunsgemäß | |
|---|---|---|---|---|---|
| | A10 | A11 | A 12 | B26 | B27 |
| Zusatz in Schlichte | keiner | 1% DBE | 1% EHS | 1% EAA | 1% AATMP |
| 24h 98% rLF | 82 | 75 | 78 | 90 | 113 |
| 48h 98% rLF | 80 | 76 | | 90 | 109 |
| 120h 98% rLF | 81 | 72 | 65 | 91 | 107 |

Tabelle 6 zeigt die Festigkeiten in N/cm² von geschlichteten Kernen, die mit dem Bindersystem NOVANOL 165 hergestellt wurden. Bei der Schlichte handelt es sich um die MIRATEC MB 522, die unmodifiziert bzw. mit erfindungsgemäßen oder nicht-erfindungsgemäßen Substanzen modifiziert wurde.

**Tabelle 7**

| | Vergleich | erfindungsgemäß | |
|---|---|---|---|
| | A13 | B28 | B29 |
| Zusatz in Schlichte | keiner | 1% EAA | 1 % AATMP |
| 24h 98% rLF | 59 | 72 | 77 |
| 48h 98% rLF | 61 | 70 | 74 |
| 120h 98% rLF | 61 | 64 | |

Tabelle 7 zeigt die Festigkeiten in N/cm² von geschlichteten Kernen, die mit dem Bindersystem NOVANOL 165 hergestellt wurden. Bei der Schlichte handelt es sich um die VELVACOAT AC 501, die unmodifiziert bzw. mit erfindungsgemäßen oder nicht-erfindungsgemäßen Substanzen modifiziert wurde.

Aus den Tabellen ist ersichtlich, dass die CH-aciden Verbindungen die Feuchtstabilität geschlichteter Kerne erhöhen.

### Messung der Formaldehydemissionen

### Herstellung der Prüfkörper im CB-Verfahren:

In einem Hobart Mischer wurde eine Sandmischung aus Quarzsand H 32, plus 3% Additiv X, plus 1,0% ECOCURE 30 BG 5 und 1,0% ECOCURE 60 BG 5 (teilweise modifiziert mit einer CH aciden Verbindung als Vergleich) homogen über 2 Minuten vermischt. Die CH-acide Verbindung wurde frisch in ECOCURE 60 BG 5 eingerührt und unmittelbar für die Sandmischung verwendet. Diese Sandmischung wurde in eine Kernschießmaschine Modell Roeper H 1 überführt und es wurden jeweils zwei Rundkerne mit einer Dimension (h x d) von 50 mm x 50 mm mit einem Schießdruck von 4 bar mittels Druckluft in die Form gebracht. Mittels KATALYSATOR 706 (1,0 ml, Begasungszeit 10 sec bei 2 bar Spüldruck) wurde der Sand ausgehärtet.

### Schlichtevorgang:

Zu der handelsüblichen MIRATEC MB 522, wurden unter Rühren die in der Ergebnistabelle aufgeführten CH-aciden Verbindungen eingerührt. Dazu wurden die im Auslieferungszustand erhaltenen MIRATEC MB 522 auf eine für die Anwendung geeignete Viskosität mittels Stadtwasser eingestellt (Ford Becher 4 mm, Auslaufzeit 11-13 sec.) und die CH-acide Verbindung unter Rühren tropfenweise innerhalb von 10 Minuten eingerührt.

Je ein 30 Minuten alter Rundkem wurde vollständig in die zu prüfende Schlichte getaucht, so dass die Schlichteschicht die Kernoberfläche komplett bedeckte, dieses entspricht einem nassem Schlichteauftrag von ca. 7,5 g.

### Messanordnung:

In einen auf 175°C vorgeheizten Muffelofen wurden 14 Rundkeme (Kernmasse ca. 2,1 kg) gestapelt, so dass der Ofenraum maximal ausgefüllt ist. Die Kemnordnung wurde so gewählt, dass die Kerne sich an den Seitenflächen nicht berühren und über zwei Lagen im Kreuzverband gestapelt liegen. Nach dem Befüllen wurde mittels einer Desagapumpe GS 312 die Luft aus dem Ofen kontinuierlich absaugt (Belüftung über vordere Ofentür, Pumpleistung 3 Liter/min) und durch drei wassergefüllte und eisgekühlte Waschflaschen die Abluft geleitet. Über 90 Minuten bei einer Ofentemperatur von 173 - 177°C wurden die Luft durch die Waschflaschen geleitet.

Anschließend wurde der Formaldehydgehalt in den drei vereinigten Waschflaschen mittels Photometer-Acetylacetonatverfahren (analog der VDI 3862 Blatt 6: 2004-02) bei 412 nm photometrisch vermessen und der Messwert auf mg Formaldehyd pro kg Kerngewicht berechnet.

**Tabelle 8**

| | Vergleich | | | |
|---|---|---|---|---|
| | A20 | A21 | A22 | A23 |
| Zusatz in ECOCURE 60 BG 5 | keiner | 2,5% EAA | 8,5% EAA | 2,5% AATMP |
| Formaldoydemission in mg/kg | 12,5 | 8,9 | 2,1 | 8,6 |
| g CH acide - Verbindung pro 14 Rundkerne | 0 | 0,525 | 1,78 | 0,525 |

Tabelle 8 zeigt die Formaldehydemissionen von unterschiedlichen Vergleichssystemen. Alle hier auf geführten Beispiele wurden mit einer unmodifzierten MIRATEC MB 522 geschlichtet. Das als ein Teil der Bindemittelkomponente für die Kerne verwendete ECOCURE 60 BG 5 wurde teilweise mit einer CH-aciden Verbindung modifiziert.

**Tabelle 9**

| | erfindungsgemäß | | |
|---|---|---|---|
| | B30 | B31 | B32 |
| Zusatz in MIRATEC MB 522 | 5% EAA | 5% MEE | 1% EAA |
| Formaldeydemission in mg/kg | 0,53 | 4,2 | 0,85 |
| g CH acide - Verbindung pro 14 Rundkeme | 5,25 | 5,25 | 1,05 |

Tabelle 9 zeigt die Formaldehydemissionen von erfindungsgemäßen Systemen. Alle Kerne wurden mit dem Bindersystem ECOCURE 30 BG 5 / ECOCURE 60 BG 5 hergestellt. Die Schlichte MIRATEC MB 522 wurde entsprechend der Angaben modifiziert.

Tabelle 8 und 9 zeigen, dass die Wirksamkeit einer Formaldehydreduzierung aufgebracht über die Schlichte deutlich effektiver Ist, als wenn die CH acide Verbindung über das Formstoffbindemittel eingebracht wird (insbesondere Beispiele A22 zu B32, die einen direkten Vergleich über die aufgebrachte Menge EAA erlauben).

Tabelle 8 und 9 zeigen, dass die Formaldehydemissionen deutlich wirksamer reduziert werden können, wenn die CH-acide Verbindung über die Schlichte eingebracht wird als im Vergleich zur Zugabe über die Formstoffmischung bzw. einer Bindemittelkomponente. Dies zeigt sich insbesondere in den Beispielen A22 und B32 - obwohl im Beispiel B32 deutlich weniger CH-acide Verbindungen eingebracht wurden, ist der Effekt auf die Formaldehydreduzierung deutlich ausgeprägter.

## Patentansprüche

1. Schlichtezusammensetzung enthaltend
(A) eine CH-acide Verbindung, welche zumindest eine beta-Dicarbonyl-Gruppe aufweist,
i) wobei die CH-acide Verbindung folgende Formel hat 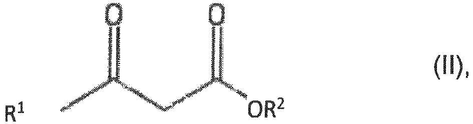 worin
R¹ ein C1- bis C18- Kohlenwasserstoff ist, vorzugsweise ein C1- bis C12- und besonders bevorzugt ein C1 bis C6- Kohlenwasserstoff, und
R² H, ein C1- bis C18- Kohlenwasserstoff, vorzugsweise ein C1- bis C12-Kohlenwasserstoff und besonders bevorzugt ein C1- bis C6-Kohlenwasserstoff ist, wobei für R² jeweils gegebenenfalls 1 bis 3 Sauerstoffatome in dem Kohlenwasserstoff enthalten sein können,
und/oder
ii) wobei die CH-acide Verbindung mehrere beta-Dicarbonyl-Gruppen der Formel
R¹C(=O)-CH₂-C(=O)-O- (I)
aufweist, worin R¹ ein C1- bis C12- Kohlenwasserstoff ist, und/oder
iii) wobei die CH-acide Verbindung ein Malonsäurediester von Alkoholen mit einer C-Kette von C1 bis C18 ist;
(B) zumindest 20 Gew.% einer Trägerflüssigkeit, enthaltend oder bestehend aus Wasser; und
(C) feuerfeste Grundstoffe.

2. Schlichtezusammensetzung gemäß Anspruch 1, wobei die CH₂-Gruppe der CH-aciden Verbindung einen pKs₁ von kleiner 15, insbesondere 5 bis 12, aufweist, jeweils bei 298 K.

3. Schlichtezusammensetzung gemäß einem oder mehreren der vorhergehenden Ansprüche, wobei die CH-acide Verbindung ausgewählt ist aus Methylacetoacetat, Ethylacetoacetat, Benzylacetoacetat, Dodecylacetoacetat, Ethylbenzoylacetat, 2-Methoxyethylacetoacetat, 2-(Acetoacetoxy)ethylmethacrylat, Propan-1,1,1-triyltrimethyl-tris-(acetoacetat) und deren Mischungen, insbesondere Methlyacetoacetat, Ethylacetoacetat, Propan-1,1,1-triyltrimethyl-tris-(acetoacetat), Malonsäurediethylester oder 2-(Acetoacetoxy)ethylmethacrylat.

4. Schlichtezusammensetzung gemäß einem oder mehreren der vorhergehenden Ansprüche, wobei die Schlichtezusammensetzung einen pH-Wert von 6 bis 10 vorzugsweise 6,5 bis 8,5 (bei 298 K) aufweist.

5. Schlichtezusammensetzung gemäß einem oder mehreren der vorhergehenden Ansprüche, wobei die Konzentration der CH-aciden Verbindung in der Schlichtezusammensetzung 0,1 bis 10 Gew.%, bevorzugt 0,5 bis 8 % Gew. und besonders bevorzugt 0,8 bis 3 Gew.% beträgt.

6. Schlichtezusammensetzung gemäß einem oder mehreren der vorhergehenden Ansprüche, wobei die Trägerflüssigkeit zu größer 50 Gew.% Wasser umfasst und im weiteren ggfs. Alkohole, einschließlich Polyalkohole und Polyetheralkohole enthält.

7. Schlichtezusammensetzung gemäß einem oder mehreren der vorhergehenden Ansprüche, wobei der Feststoffgehalt der Schlichtezusammensetzung in der gebrauchsfertigen Schlichtezusammensetzung vor Anwendung, d.h. ggf. nach Verdünnung, 10 bis 70 Gew.% beträgt, bzw. 30 bis 80 Gew. % vor Verdünnung.

8. Schlichtezusammensetzung gemäß einem oder mehreren der vorhergehenden Ansprüche, wobei Schlichtezusammensetzung größer 40 Gew.% Trägerflüssigkeit aufweist.

9. Schlichtezusammensetzung gemäß einem oder mehreren der vorhergehenden Ansprüche, wobei die Trägerflüssigkeit bei 160°C und 1013 mbar vollständig verdampfbar ist.

10. Schlichtezusammensetzung gemäß einem oder mehreren der vorhergehenden Ansprüche, wobei die Schlichtezusammensetzung 10 bis 80 Gew.%, vorzugsweise 30 bis 70 Gew.% feuerfeste Grundstoffe enthält, bezogen auf den Feststoffgehalt der Schlichtezusammensetzung.

11. Schlichtezusammensetzung gemäß einem oder mehreren der vorhergehenden Ansprüche, wobei die feuerfesten Grundstoffe Quarz, Aluminiumoxid, Zirkoniumdioxid, Aluminiumsilikate, Zirkonsande, Zirkonsilikate, Olivin, Talk, Glimmer, Koks, Feldspat, Diatomit, kalzinierte Kaoline, Kaolinit, Metakaolinit, Eisenoxid, Bauxit oder deren Mischungen sind.

12. Schlichtezusammensetzung gemäß einem oder mehreren der vorhergehenden Ansprüche, wobei die feuerfesten Grundstoffe Partikelgrößen von 0,1 bis 300 µm, insbesondere 1 bis 280 µm, gemessen mittels Lichtstreuung nach DIN/ISO 13320, aufweisen.

13. Schlichtezusammensetzung gemäß einem oder mehreren der vorhergehenden Ansprüche, wobei die Schlichtezusammensetzung 0,1 bis 20 Gew.%, insbesondere 0,5 bis 5 Gew.%, zumindest eines Bindemittels umfasst, bezogen auf den Feststoffgehalt der Schlichtezusammensetzung.

14. Schlichtezusammensetzung gemäß einem oder mehreren der vorhergehenden Ansprüche, wobei die Schlichtezusammensetzung von 0 bis 30 Gew.%, bevorzugt von 1 bis 25 Gew.%, und insbesondere bevorzugt von 1 bis 20 Gew.%, Graphit umfasst, bezogen auf den Feststoffgehalt der Schlichtezusammensetzung.

15. Schlichtezusammensetzung gemäß einem oder mehreren der vorhergehenden Ansprüche, wobei die Schlichtezusammensetzung zumindest einen der nachfolgenden Tone enthält: Palygorskit, Hectorit und Natriumbentonit, bevorzugt alle drei.

16. Schlichtezusammensetzung gemäß einem oder mehreren der vorhergehenden Ansprüche, wobei die Schlichtezusammensetzung einen Ton und Glimmer umfasst, wobei der Ton 50 bis 90 Gewichts-% Kaolinit und 5 bis 35 Gewichts-% Montmorillonit umfasst und die Schlichtezusammensetzung, bezogen auf die Feststoffkomponente, 5 bis 50 Gew.% Tone umfasst.

17. Gießformen umfassend Formen und Kernen ganz- oder teilflächig auf der Oberfläche beschichtet mit der Schlichtezusammensetzung gemäß einem oder mehreren der vorhergehenden Ansprüche, ggf. nach Verdünnung mit zumindest Wasser, wobei die Formen oder Kernen aus einer Formstoffmischung nach zumindest partieller Aushärtung erhältlich sind.

18. Gießform nach Anspruch 17, wobei die Aushärtung mittel PU-ColdBox-, PU-NoBake-, Resol-CO₂⁻, BETASET- oder Epoxy-SO₂ - Verfahren erfolgt, insbesondere PU-ColdBox-, PU-NoBake- oder Resol-CO₂ - Verfahren.

19. Gießform nach Anspruch 17 oder 18, wobei die Trockenschichtdicke von 0,01 bis 1 mm, bevorzugt von 0,05 bis 0,8 mm, besonders bevorzugt von 0,1 bis 0,6 mm und ganz besonders bevorzugt 0,2 mm bis 0,3 mm beträgt.

20. Verfahren zur Herstellung der Gießformen nach Anspruch 17 bis 19, wobei die Schlichtezusammensetzung nach dem Aufbringen auf die Gießform einer Temperatur von 100 bis 200°C, insbesondere 120 bis 180°C zur Trocknung der Schlichtezusammensetzung ausgesetzt wird, insbesondere in einem Durchlaufofen.

21. Verwendung der Schlichtezusammensetzung gemäß einem oder mehreren der Ansprüche 1 bis 17 zur Beschichtung von Gießformen, ggf. nach Verdünnung mit zumindest Wasser, wobei die Gießformen nach Formgebung einer Formstoffmischung zumindest partiell ausgehärtet wurden.

22. Verwendung nach Anspruch 21, wobei die Aushärtung mittel PU-ColdBox-, PU-NoBake-, Resol-CO₂⁻, Betaset- oder Epoxy-SO₂ Verfahren erfolgt, insbesondere PU-ColdBox-, PU-NoBake- oder Resol-CO₂ - Verfahren.

## Claims

1. A sizing composition comprising:
(A) a CH-acidic compound that comprises at least one beta-dicarbonyl group,
i) wherein the CH-acidic compound has the following formula: 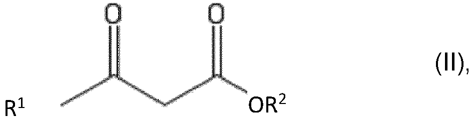 in which
R¹ is a C1 to C18 hydrocarbon, preferably a C1 to C12, and particularly preferably a C1 to C6 hydrocarbon, and
R² is H, a C1 to C18 hydrocarbon, preferably a C1 to C12 hydrocarbon, and particularly preferably a C1 to C6 hydrocarbon, wherein in R² optionally 1 to 3 oxygen atoms may be contained in the hydrocarbon,
and/or
ii) wherein the CH-acidic compound has several beta-dicarbonyl groups of formula
R¹C(=O)-CH₂-C(=O)-O- (I)
in which R¹ is a C1 to C12 hydrocarbon,
and/or
iii) wherein the CH-acidic compound is a malonic acid diester of alcohols with a C-chain of C1 to C18;
(B) at least 20% by weight of a carrier liquid comprising or consisting of water; and
(C) refractory base materials.

2. The sizing composition according to claim 1, wherein the CH₂ group of the CH-acidic compound has a pKa₁ of less than 15, in particular 5 to 12, in each case at 298 K.

3. The sizing composition according to one or more of the preceding claims, wherein the CH-acidic compound is selected from methyl acetoacetate, ethyl acetoacetate, benzyl acetoacetate, dodecyl acetoacetate, ethyl benzoylacetate, 2-methoxyethyl acetoacetate, 2-(acetoacetoxy)ethyl methacrylate, propane-1,1,1-triyltrimethyl-tris-(acetoacetate) and their mixtures, in particular methyl acetoacetate, ethyl acetoacetate, propane-1,1,1-triyltrimethyl-tris-(acetoacetate), diethyl malonate or 2-(acetoacetoxy)ethyl methacrylate.

4. The sizing composition according to one or more of the preceding claims, wherein the sizing composition has a pH of 6 to 10 preferably 6.5 to 8.5 (at 298 K).

5. The sizing composition according to one or more of the preceding claims, wherein the concentration of the CH-acidic compound in the sizing composition is 0.1 to 10% by weight, preferably 0.5 to 8% by weight, and particularly preferably 0.8 to 3% by weight.

6. The sizing composition according to one or more of the preceding claims, wherein the carrier liquid comprises more than 50% by weight water and moreover may optionally comprise alcohols, including polyalcohols and polyether alcohols.

7. The sizing composition according to one or more of the preceding claims, wherein the solid content of the sizing composition in the ready-to-use sizing composition before use, i.e. optionally after dilution is 10 to 70% by weight, or respectively 30 to 80% by weight before dilution.

8. The sizing composition according to one or more of the preceding claims, wherein the sizing composition comprises more than 40% by weight carrier liquid.

9. The sizing composition according to one or more of the preceding claims, wherein the carrier liquid is completely vaporable at 160°C and 1013 mbar.

10. The sizing composition according to one or more of the preceding claims, wherein the sizing composition contains 10 to 80% by weight, preferably 30 to 70% by weight, refractory base materials relative to the solid content of the sizing composition.

11. The sizing composition according to one or more of the preceding claims, wherein the refractory base materials are quartz, aluminum oxide, zirconium dioxide, aluminum silicate, zircon sands, zircon silicates, olivine, talcum, mica, coke, feldspar, diatomite, calcined kaolins, kaolinite, metakaolinite, iron oxide, bauxite or mixtures thereof.

12. The sizing composition according to one or more of the preceding claims, wherein the refractory base materials have particle sizes of 0.1 to 300 µm, in particular 1 to 280 µm, measured by means of light scattering pursuant to DIN/ISO 13320.

13. The sizing composition according to one or more of the preceding claims, wherein the sizing composition comprises 0.1 to 20% by weight, in particular 0.5 to 5% by weight, of at least one binder relative to the solid content of the sizing composition.

14. The sizing composition according to one or more of the preceding claims, wherein the sizing composition comprises 0 to 30% by weight, preferably 1 to 25% by weight, and especially preferably 1 to 20% by weight graphite relative to the solid content of the sizing composition.

15. The sizing composition according to one or more of the preceding claims, wherein the sizing composition contains at least one of the following clays: palygorskite, hectorite and sodium bentonite, and preferably all three.

16. The sizing composition according to one or more of the preceding claims, wherein the sizing composition comprises a clay and mica, wherein the clay comprises 50 to 90% by weight kaolinite and 5 to 35% by weight montmorillonite, and the sizing composition comprises 5 to 50% by weight clays relative to the solid components.

17. Casting molds comprising molds and cores coated entirely or partially on the surface with the sizing composition according to one or more of the preceding claims, optionally after dilution with at least water, wherein the molds or cores are obtainable from a mold material mixture after at least partial curing.

18. The casting mold according to claim 17, wherein the curing is performed by means of PU cold-box, PU no-bake, Resol-CO₂, BETASET or Epoxy-SO₂ methods, in particular PU cold-box, PU no-bake or Resol-CO₂ methods.

19. The casting mold according to claim 17 or 18, wherein the dry layer thickness is 0.1 to 1 mm, preferably 0.05 to 0.8 mm, particularly preferably 0.1 to 0.6 mm and most preferably 0.2 to 0.3 mm.

20. A method for producing the casting molds according to claims 17 to 19, wherein after being applied to the casting mold, the sizing composition is exposed to a temperature of 100 to 200°C, in particular 120 to 180°C to dry the sizing composition, in particular in a continuous furnace.

21. A use of the sizing composition according to one or more of claims 1 to 17 for coating casting molds, optionally after dilution with at least water, wherein after shaping a mold material mixture the casting molds are at least partially cured.

22. The use according to claim 21, whereby the curing is performed by means of PU cold-box, PU no-bake, Resol-CO₂, Betaset or Epoxy-SO₂ methods, in particular PU cold-box, PU no-bake or Resol-CO₂ methods.

## Revendications

1. Composition de finition, comprenant
(A) un composé CH-acide qui comporte au moins un groupe bêta-dicarbonyle,
i) le composé CH-acide ayant la formule suivante 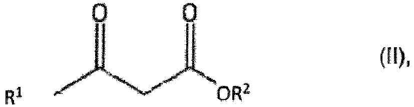 dans laquelle
R¹ représente un hydrocarbure en C₁ à C₁₈, de préférence un hydrocarbure en C₁ à C₁₂ et de manière particulièrement préférée un hydrocarbure en C₁ à C₆, et
R² représente H,
un hydrocarbure en C₁ à C₁₈, de préférence un hydrocarbure en C₁ à C₁₂ et de manière particulièrement préférée un hydrocarbure en C₁ à C₆, 1 à 3 atomes d'oxygène pouvant être contenus le cas échéant respectivement pour R² dans l'hydrocarbure,
et/ou
ii) le composé CH-acide comprenant plusieurs groupes bêta-dicarbonyle de formule
R¹C(=O)-CH₂-C(=O)-O- (I)
dans laquelle R¹ représente un hydrocarbure en C₁ à C₁₂,
et/ou
iii) le composé CH-acide représentant un diester d'acide malonique d'alcools ayant une chaîne C de C₁ à C₁₈ ;
(B) au moins 20 % en poids d'un liquide véhicule, contenant ou se composant d'eau ; et
(C) des matières de base réfractaires.

2. Composition de finition selon la revendication 1, dans laquelle le groupe CH₂ du composé CH-acide présente un pKs₁ inférieur à 15, en particulier de 5 à 12, respectivement à 298 K.

3. Composition de finition selon l'une ou plusieurs des revendications précédentes, dans laquelle le composé CH-acide est choisi parmi l'acétoacétate de méthyle, l'acétoacétate d'éthyle, l'acétoacétate de benzyle, l'acétoacétate de dodécyle, l'acétate d'éthylbenzoyle, l'acétoacétate de 2-méthoxyéthyle, le méthacrylate de 2-(acétoacétoxy)éthyle, le tris-(acétoacétate) de propane- 1,1,1-triyltriméthyle et leurs mélanges, en particulier l'acétoacétate de méthyle, l'acétoacétate d'éthyle, le tris-(acétoacétate) de propane-1,1,1-triyltriméthyle, le diéthylester d'acide malonique ou le méthacrylate de 2-(acétoacétoxy)éthyle.

4. Composition de finition selon l'une ou plusieurs des revendications précédentes, ladite composition de finition présentant un pH de 6 à 10, de préférence de 6,5 à 8,5 (à 298 K).

5. Composition de finition selon l'une ou plusieurs des revendications précédentes, dans laquelle la concentration du composé CH-acide dans la composition de finition est de 0,1 à 10 % en poids, de préférence de 0,5 à 8% en poids et de manière particulièrement préférée de 0,8 à 3 % en poids.

6. Composition de finition selon l'une ou plusieurs des revendications précédentes, dans laquelle le liquide véhicule comprend de l'eau à plus de 50 % en poids et contient le cas échéant en outre des alcools, y compris des polyalcools et des polyéther-alcools.

7. Composition de finition selon l'une ou plusieurs des revendications précédentes, dans laquelle la teneur en matières solides de la composition de finition dans la composition de finition prête à emploi avant application, c'est-à-dire le cas échéant après dilution, est de 10 à 70 % en poids, et/ou de 30 à 80 % avant dilution.

8. Composition de finition selon l'une ou plusieurs des revendications précédentes, ladite composition de finition présentant plus de 40 % en poids de liquide véhicule.

9. Composition de finition selon l'une ou plusieurs des revendications précédentes, dans laquelle le liquide véhicule est entièrement évaporable à 160°C et 1013 mbar.

10. Composition de finition selon l'une ou plusieurs des revendications précédentes, ladite composition de finition comprenant 10 à 80 % en poids, de préférence 30 à 70 % en poids de matières de base réfractaires, par rapport à la teneur en solides de la composition de finition.

11. Composition de finition selon l'une ou plusieurs des revendications précédentes, dans laquelle les matières de base réfractaires sont le quartz, l'oxyde d'aluminium, le dioxyde de zirconium, les silicates d'aluminium, les sables de zircon, les silicates de zircon, l'olivine, le talc, le mica, les cokes, le feldspath, la diatomite, les kaolins calcinés, la kaolinite, le métakaolinite, l'oxyde de fer, la bauxite ou leurs mélanges.

12. Composition de finition selon l'une ou plusieurs des revendications précédentes, dans laquelle les matières de base réfractaires présentent des tailles de particules de 0,1 à 300 µm en particulier de 1 à 280 µm, mesurées par diffusion de la lumière d'après la norme DIN/ISO 13320.

13. Composition de finition selon l'une ou plusieurs des revendications précédentes, ladite composition de finition comprenant 0,1 à 20 % en poids, en particulier 0,5 à 5 % en poids d'au moins un liant, par rapport à la teneur en solides de la composition de finition.

14. Composition de finition selon l'une ou plusieurs des revendications précédentes, ladite composition de finition comprenant 0 à 30 % en poids, de préférence de 1 à 25 % en poids, et de manière particulièrement préférée de 1 à 20 % en poids de graphite, par rapport à la teneur en solides de la composition de finition.

15. Composition de finition selon l'une ou plusieurs des revendications précédentes, ladite composition de finition comprenant au moins l'une des argiles suivantes : palygorskite, hectorite et bentonite de sodium, de préférence toutes les trois.

16. Composition de finition selon l'une ou plusieurs des revendications précédentes, ladite composition de finition comprenant une argile et du mica, l'argile comprenant 50 à 90 % en poids de kaolinite et 5 à 35 % en poids de montmorillonite et la composition de finition comprenant, par rapport aux composants solides, 5 à 50 % en poids d'argiles.

17. Moules de coulée comprenant des moules et des noyaux recouverts sur la surface partiellement ou à pleine surface avec la composition de finition selon l'une ou plusieurs des revendications précédentes, le cas échéant après dilution avec au moins de l'eau, les moules et noyaux pouvant être obtenus à partir d'un mélange de matières de moulage après durcissement au moins partiel.

18. Moule de coulée selon la revendication 17, dans lequel le durcissement s'effectue par des procédés PU-boîte froide, PU-sans cuisson, résol-CO₂, BETASET ou époxy-SO₂, en particulier des procédés PU-boîte froide, PU-sans cuisson, ou résol-CO₂.

19. Moule de coulée selon la revendication 17 ou 18, dans lequel l'épaisseur de couche sèche est de 0,01 à 1 mm, de préférence de 0,05 à 0,8 mm, de manière particulièrement préférée de 0,1 à 0,6 mm et de manière toute particulièrement préférée de 0,2 mm à 0,3 mm.

20. Procédé de fabrication de moules de coulée selon les revendications 17 à 19, dans lequel la composition de finition, après application sur le moule de coulée, est soumise à une température de 100 à 200°C, en particulier de 120 à 180°C, pour le séchage de la composition de finition, de préférence dans un four continu.

21. Utilisation de la composition de finition selon l'une ou plusieurs des revendications 1 à 17 pour le revêtement de moules de coulée, le cas échéant après dilution avec au moins de l'eau, dans laquelle les moules de coulée ont été au moins partiellement durcis après la mise en forme d'un mélange de matières de moulage.

22. Utilisation selon la revendication 21, dans laquelle le durcissement s'effectue par des procédés PU-boîte froide, PU-sans cuisson, résol-CO₂, Bêtaset- ou époxy-SO₂, en particulier des procédés PU-boîte froide, PU-sans cuisson, ou résol-CO₂.
